# EUROPÄISCHE PATENTSCHRIFT

(11) **EP 0 786 709 B1**
(45) Veröffentlichungstag und Bekanntmachung des Hinweises auf die Patenterteilung: **07.10.1998**
(21) Anmeldenummer: 96120302.3
(22) Anmeldetag: 04.05.1995
(51) Int. Cl.: G05B 13/04

(54) **Schaltungsanordnung eines Reglers mit nachgiebiger Rückführung**
Circuit arrangement for a controller with yielding feedback
Circuit pour un régulateur à rétroaction flexible

(30) Priorität: 16.07.1994 DE 4425188
(43) Veröffentlichungstag der Anmeldung: 30.07.1997
(62) Teilanmeldung aus: 95106693.5
(73) Patentinhaber: ABB PATENT GmbH, 68309 Mannheim (DE)
(72) Erfinder: Hanus, Borivoy, 190 00 Prag 1 (CZ); Hernych, Milos, Liberec 6 460 06 (CZ); Sindelar, Rudolf, 69494 Hirschberg (DE)
(74) Vertreter: Rupprecht, Klaus, Dipl.-Ing.

(56) Entgegenhaltungen:
- PROCEEDINGS OF THE 8TH TRIENNIAL WORLD CONGRESS OF THE INTERNATIONAL FEDERATION OF AUTOMATIC CONTROL, Bd. 1, August 1981, KYOTO JP, Seiten 109-115, XP002029923 K. WATANABE ET AL.: "Modified Smith predictor control for multivariable systems with multiple delays subject to unmeasurable disturbances"
- PROCEEDINGS OF THE AMERICAN CONTROL CONFERENCE, Bd. 3, 26. - 28.Juni 1991, BOSTON US, Seiten 2800-2805, XP000269108 E.K.C. LAU ET AL.: "Experimental evaluation of a kalman filter based multistep adaptive predictive controller"

## Beschreibung

Die Erfindung bezieht sich auf eine Schaltungsanordnung eines Reglers mit nachgiebiger Rückführung nach dem Oberbegriff des Anspruchs 1.

Eine ähnliche Schaltungsanordnung oder Regelkreisstruktur ist aus atp-Automatisierungstechnische Praxis 36 (1994) 1, Seiten 46 bis 52, insbesondere Bild 3 als Smith-Prädiktor bekannt. In dieser Veröffentlichung sind auch die generellen Vorteile eines Smith-Prädiktors gegenüber Standardreglern bei Regelstrecken mit dominierender Totzeit angesprochen, sowie einige Möglichkeiten zur Erweiterung der Schaltung, um ein besseres Störverhalten - jedoch nur bei meßbaren Störgrößen - zu erzielen.

Eine Schaltungsanordnung nach dem Oberbegriff des Anspruchs 1, also mit einem ersten und einem zweiten Modell sowie einem Filter in der Rückführung ist aus Proceedings of the 8th Triennial World Congress of the International Federation of Automatic Control, Bd. 1, August 1981 Kyoto JP, Seiten 109 bis 115, K. Watanabe et al. "Modified Smith predictor control for multivariable systems with multiple delays subject to unmeasureable disturbances" bekannt, worin ein modifizierter Smith-Regler für mehrdimensionale Regelstrecken n-ter Ordnung mit unterschiedlichen Totzeiten beschrieben ist. Die Modifikation besteht in der Verwendung eines Blockes M(s), dessen Zeitverhalten mit einer Übertragungsmatrix der Dimension (m x m) gegeben ist. Sein Eingangssignal stellt die Differenz der Regelgrößen und der Ausgangssignale des zweiten Regelstrecken-Zustandsmodells, d.h. mit Totzeit dar. Neben dem Ausgang des ersten Regelstrecken-Zustandsmodells, d.h. ohne Totzeit wird der Ausgang des Blocks M(s) am Eingang des Reglers aufgeschaltet. Es wird im allgemeinen als erstes Regelstrecken-Zustandsmodell ein Modell höherer als erster Ordnung verwendet. Hierdurch entsteht ein Instabilitätsproblem des inneren Regelkreises. Der daher nicht als Pl, sondern als PID-Typ ausgeführt werden muß Wenn nicht sogar eine Adaptation der Reglerparameter erfolgen muß, damit die notwendige Robustheit erzielt wird. Anhand einer Polvorgabe der Übertragungsfunktion der Matrix M(s) soll eine Beschleunigung des Regelprozesses beim Eintritt einer Regelgröße-Störung erzielt werden. Es werden im Aufsatz nur asymptotisch stabile Regelstrecken vorausgesetzt.

Im Aufsatz Proceedings of the American Control Conference, Boston US, Bd. 3, 26. Juni 1991, Seiten 2800 bis 2805, E.K.C. Lau et al "Experimental evaluation of a kalman filter based multistep adaptive predictive controller" wird ein adaptiver Regler in der Z-Transformation beschrieben, der auf einem modifizierten Kalman-Filter basiert. Die Filterkoeffiezienten werden so eingestellt, daß der Prädiktionsfehler bei dem vorhandenen Rauschen der Regelgröße und bei der sich ändernden Totzeit minimal wird. Es wird gezeigt, daß der Prädiktionsfehler bei der minimalen Varianz zwar größer gegenüber dem optimalen Fall ist, aber der Verlauf der ganzen Varianz dabei flacher ist, wodurch eine größere Robustheit erreicht wird. Das Verhalten bei astatischen und instabilen Regelstrecken wird nicht erwähnt.

Die Regelgüte hängt weitgehend von der Übereinstimmung des Streckenmodells im Regler mit dem tatsächlichen Streckenverhalten ab. Die bekannte modifizierte Smith-Schaltung läßt sich problemlos verwenden bei stabilen Regelstrecken, d. h. bei aperiodischen (S-)Regelstrecken mit oder ohne Totzeit und beliebiger Ordnung oder bei schwach schwingenden Regelstrecken mit Ausgleich.

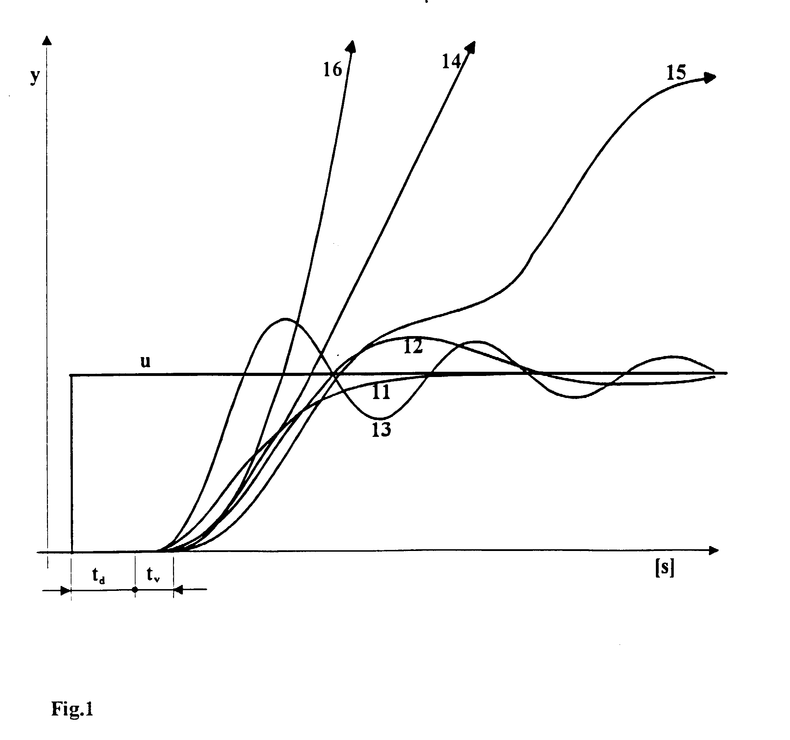

In Fig. 1 ist das Stellverhalten unterschiedlicher Regelstrecken dargestellt, auf die vor- und nachstehend Bezug genommen wird. Dabei sind zeitliche Verläufe 11 bis 16 der Regelgröße y auf eine sprungförmige Änderung der Stellgröße u aufgetragen. Mit t_{d} ist die Totzeit, mit tᵥ ist die Verzugszeit bezeichnet.

Mit 11 ist ein typischer Verlauf einer aperiodischen (oder S-)Regelstrecke bezeichnet, die auch als "stationäre" Regelstrecke "mit Ausgleich" bezeichnet wird. Mit 12 ist eine schwach schwingende Regelstrecke mit Ausgleich, mit 13 eine stark schwingende Regelstrecke mit Ausgleich bezeichnet. 14 gilt für verzögerte astatische und 15 für außerdem noch schwingende Regelstrecken, d.h. ohne Ausgleich. Der Verlauf 16 gilt für eine instabile Regelstrecke.

Der Erfindung liegt die Aufgabe zugrunde, eine Schaltungsanordnung mit nachgiebigem Regler anzugeben, die auch bei stark schwingenden, bei astatischen oder sogar bei instabilen Regelstrecken ein gutes Regelverhalten aufweist.

Diese Aufgabe wird bei einer Schaltungsanordnung nach dem Oberbegriff des Anspruchs 1 durch dessen kennzeichnende Merkmale gelöst. Vorteilhafte Ausgestaltungen sind in weiteren Ansprüchen angegeben.

Vorteile der erfindungsgemäßen Schaltungsanordnung bestehen darin, daß die Stabilität des Regelverhaltens auch bei instabilen und stark schwingenden Regelstrecken höherer Ordnung erzielt wird. Stör- und Führungsverhalten sind optimal. Es läßt sich eine Regelgüte erreichen, die wesentlich besser ist als bei einem konventionellen PID-Regler, und fast so gut wie bei einem Zustandsregler mit vollständiger Rückführung der Zustandsgrößen. Planung und Inbetriebnahme sind einfach und problemlos durchführbar.

Eine ausführliche Beschreibung der Erfindung und ihrer Ausgestaltungsmöglichkeiten erfolgt nachstehend anhand der Zeichnungsfiguren.

Es zeigen:
- Fig. 1: das Stellverhalten unterschiedlicher Regelstrecken,
- Fig. 2: eine bekannte Schaltungsanordnung eines Reglers mit nachgiebiger Rückführung, und
- Fig. 3: eine erfindungsgemäße Abwandlung der Schaltungsanordnung gemäß Fig. 2 durch Beobachter.

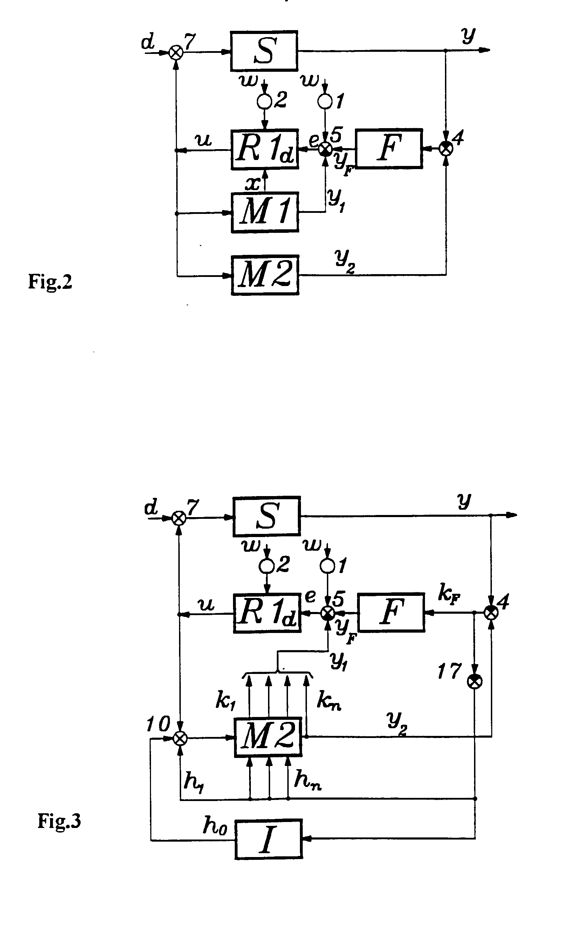

Fig. 2 zeigt eine aus dem Stand der Technik (K. Watanabe et al.) ) ableitbare Regelkreisstruktur mit Anordnung eines Filters F in der Rückführung.

Dargestellt ist eine Regelstrecke S, an deren Ausgang die Regelgröße y abgegriffen und zu einer ersten Subtraktionsstelle 4 geführt ist.

Ein Regler R1d liefert eine Stellgröße u, die von einer ersten Additionsstelle 7 mit einer - nicht meßbaren - Störgröße d verknüpft wird zur Bildung des Eingangssignals der Regelstrecke S.

Der Regler R1d kann ein konventioneller Regler, z.B. Pl- oder PID-Regler sein.

Die Stellgröße u ist auf eine negative Rückführung mit einem ersten Modell M1 und eine positive Rückführung mit einem zweiten Modell M2 geführt.

Das Ausgangssignal y₁ des ersten Modells M1 wird an einer zweiten Subtraktionsstelle 5 vom Ausgangssignal des Filters F subtrahiert. Ausgangssignal der zweiten Subtraktionsstelle 5 ist die Regelabweichung e, die Eingangssignal des ersten Reglers R1d ist.

Eine Führungsgröße bzw. ein Sollwert w kann entweder an einer ersten Stelle 1 der zweiten Subtraktionsstelle 5 aufgeschaltet werden, oder an einer zweiten Stelle 2 auf einen weiteren Eingang des Reglers R1d.

Bei einer Zuführung des Sollwerts w über die zweite Stelle 2 wird der Sollwert w additiv auf die Eingänge des P-Kanals und der restlichen Kanäle des Reglers aufgeschaltet. Die Verstärkung für den gegebenenfalls vorhandenen I-Kanal ist identisch mit der Verstärkung des Ausgangssignals der Subtraktionsstelle 5. Die Verstärkung für die restlichen Kanäle kann beliebig sein.

Das erste Modell M1 kann außerdem zustandsvariable Signale x zur Einstellung des ersten Reglers R1d liefern. Vom Ausgangssignal y₂ des zweiten Modells M2 wird an der ersten Subtraktionsstelle 4 die Regelgröße y subtrahiert. Das Differenzsignal y₂-y ist dem Filter F zugeführt.

Fig. 3 zeigt eine erfindungsgemäße Schaltung, bei der - anders als beim Stand der Technik - ein erstes Modell M1 nicht als selbständiges dynamisches Glied, sondern als die Summe von gewichteten Werten der Zustandsgrößen eines zweiten Modells M2 realisiert ist.

Das zweite Modell M2 ist dabei im Prinzip ein Beobachter der Zustandsgrößen der Regelstrecke S, da das Ausgangssignal y2 des zweiten Modells M2 der Regelgröße y nachgeführt wird durch gewichtete Rückführung des Differenzsignals y2-y. Das Differenzsignal y2-y wird nach einer Vorzeichenumkehr 17 mit Gewichtungskoeffizienten h1 bis hn additiv in das zweite Modell M2 eingeführt; außerdem wird das negierte Differenzsignal y2-y mit einem Koeffizienten ho an einer vierten Additionsstelle 10 vor dem Eingang des zweiten Modells M2 additiv zum mit h1 gewichteten Differenzsignal y2-y und zur Stellgröße u addiert.

Das dynamische Eigenverhalten des bezogen auf die Ausregelung der Differenz y2-y nachgeführten Modells M2 kann gezielt durch Auslegung der Koeffizienten h1 bis hn des Nachführvektors h festgelegt werden.

Die vom Modell M2 abgreifbaren Zustandsvariablen sind praktisch identisch mit denjenigen der Regelstrecke S, die im allgemeinen nicht als Meßwert zur Verfügung stehen. Durch Gewichtung der n Zustandsvariablen mit Koeffizienten k1 bis kn und durch Summation wird das Signal y1 gebildet, das der zweiten Subtraktionsstelle 5 zugeführt ist (vergl. Fig. 3). Das in Fig. 2 gezeigte erste Modell M1 wird auf diese Weise realisiert.

Die in Fig. 3 gezeigte Schaltungsanordnung hat den Vorteil, daß durch die dynamische Nachführung des zweiten Modells M2 die Zustandsgrößen schnell geändert werden und über das Signal y1 den Regler R1d aktivieren. Hierdurch kann die prädiktive Wirkung des Filters F reduziert werden.

## Patentansprüche

1. Schaltungsanordnung,
- die eine Regelstrecke (S) mit einem Ausgangssignal (y) und
- einen kontinuierlichen oder diskreten, linearen oder nichtlinearen Regler (R1d) mit nachgiebiger Rückführung der Stellgröße (u) auf den Reglereingang aufweist, wobei
a) die Rückführung Mittel zur Realisierung der Funktion eines ersten Modells (M1) mit Polen in seiner Übertragungsfunktion enthält, dessen Ausgangssignal (y1) mit negativer Wirkung rückgeführt ist und wobei die Übertragungsfunktion des ersten Modells (M1) der M₁-Teil der approximierenden Übertragungsfunktion M₁(s) · e^{-St_{d}} ≅ S(s) ist, S(s) die exakte Übertragungsfunktion der Regelstrecke (S) und td die Totzeit ist,
b) die Rückführung außerdem Mittel zur Realisierung der Funktion eines zweiten Modells (M2) enthält, dessen Ausgangssignal (y₂) mit positiver Wirkung rückgeführt ist, und wobei die Übertragungsfunktion (M₂) des zweiten Modells (M2) die beste Approximation der Übertragungsfunktion (S(s)) ist, so daß im Beharrungszustand des Regelkreises (S, R1d) die Summe der negativen und der positiven Rückführung Null ist, und wobei außerdem
c) in der Rückführung ein Filter (F) angeordnet ist,
- dessen Eingangssignal das Differenzsignal (y₂-y) zwischen dem Ausgangssignal (y₂) des zweiten Modells (M2) und dem Ausgangssignal (y) der Regelstrecke (S) ist, und
- dessen Ausgangssignal (y_{F}) mit dem Ausgangssignal (y₁) des ersten Modells (M1) ) verknüpft ist zur Bildung einer Regelabweichung (e),
dadurch gekennzeichnet, daß
d) das zweite Modell (M2) als Beobachter der Zustandsgrößen der Regelstrecke (S) ausgeführt ist, wobei das Ausgangssignal (y₂) des zweiten Modells (M2) der Regelgröße (y) durch gewichtete Rückführung (17, h1 bis hn, I, ho, 10) der Differenz (y₂-y) von Ausgangssignal (y₂) und Regelgröße (y) zum Eingang des zweiten Modells (M2) nachgeführt ist, und
e) das erste Modell (M1) nicht als ein selbständiges dynamisches Glied, sondern als die Summe von gewichteten Werten der Zustandsgrößen des zweiten Modells (M2) realisiert ist.

2. Schaltungsanordnung nach Anspruch 1, dadurch gekennzeichnet, daß das an der ersten Subtraktionsstelle (4) gebildete Differenzsignal (y2-y) aufgeteilt ist und einerseits nach einer Gewichtung mit einem Koeffizienten (k_{F}) zum Filter (F) geführt ist und andererseits wie eine negative Rückführung zu Additonsstellen im zweiten Modell (M2) und außerdem direkt sowie zusätzlich über einen Integrator (I) zu einer vierten Additionsstelle (10) vor dem Eingang des zweiten Modells (M2) geführt ist.

3. Schaltungsanordnung nach Anspruch 2, dadurch gekennzeichnet, daß das mit dem Koeffizienten (k_{F}) multiplizierte Ausgangssignal der ersten Subtraktionsstelle (4) direkt, also ohne Zwischenschaltung des Filters (F) auf die zweite Subtraktionsstelle (5) geführt ist.

## Claims

1. Circuit arrangement,
- which has a control path (S) with an output signal (y) and
- a continuous or discrete, linear or non-linear regulator (Rld) having flexible feedback for the manipulated variable (u) to the regulator input,
a) the feedback containing means for performing the function of a first model (M1) with poles in its transfer function, whose output signal (y1) is fed back with a negative effect and the transfer function of the first model (M1) of the M₁ part of the approximating transfer function being M₁(s) · e^{-st}_{d} ≅ S(s), S(s) being the exact transfer function of the control path (S) and t_{d} being the dead time,
b) the feedback also containing means for performing the function of a second model (M2), whose output signal (y2) is fed back with a positive effect, the transfer function (M₂) of the second model (M2) being the best approximation to the transfer function (S(s)), so that, when the control loop (S, R1d) is in the steady state, the sum of the negative feedback and the positive feedback is zero, and, in addition,
c) a filter (F) being arranged in the feedback path,
- whose input signal is the difference signal (y2-y) between the output signal (y2) of the second model (M2) and the output signal (y) of the control path (S), and
- whose output signal (yF) is linked to the output signal (y1) of the first model (M1) to form a control error (e),
characterized in that
d) the second model (M2) is designed as a monitor for the state variables of the control path (S), the output signal (y₂) from the second model (M2) being slaved to the controlled variable (y) by weighted feedback (17, h1 to hn, 1, ho, 10) of the difference (y₂-y) between the output signal (y₂) and the controlled variable (y) to the input of the second model (M2), and
e) the first model (M1) is not implemented as an autonomous, dynamic element but as the sum of weighted values of the state variables of the second model (M2) .

2. Circuit arrangement according to Claim 1, characterized in that the difference signal (y2-y) formed at the first subtraction point (4) is split and is passed, on the one hand, after weighting with a coefficient (k_{F}) to the filter (F) and, on the other hand, as negative feedback to addition points in the second model (M2) and, in addition, is passed directly and in addition via an integrator (I) to a fourth addition point (10) upstream of the input of the second model (M2).

3. Circuit arrangement according to Claim 2, characterized in that the output signal from the first subtraction point (4) is multiplied by the coefficient (K_{F}) and is then passed directly, that is to say without the interposition of the filter (F) to the second subtraction point (5).

## Revendications

1. Agencement de circuit comportant
- un système asservi (S) avec un signal de sortie (y) et
- un premier régulateur (R1d) continu ou discret, linéaire ou non linéaire, avec une boucle de rétro-action flexible de la variable réglante (u) sur l'entrée du régulateur,
a) la boucle de rétro-action contenant des moyens pour réaliser la fonction d'un premier modèle (M1) avec des pôles dans sa fonction de transfert, dont le signal de sortie (y1) est ramené avec une action négative et la fonction de transfert du premier modèle (M1) étant le membre M1 de la fonction de transfert approchée M1(s) . e^{-std} ≃ S(s), S(s) étant la fonction de transfert exacte du système asservi (S) et t_{d} le temps mort,
b) la boucle de rétro-action contenant en outre des moyens pour réaliser la fonction d'un deuxième modèle (M2), dont le signal de sortie (y2) est ramené avec une action positive et la fonction de transfert (M₂) du deuxième modèle (M2) étant la meilleure approximation de la fonction de transfert (S(s)), de sorte que dans l'état figé du circuit de régulation (S, R1d), la somme des rétroactions négative et positive est nulle et
c) un filtre (F) étant disposé dans la boucle de rétro-action, filtre
- dont le signal d'entrée est le signal différentiel (y2 - y) entre le signal de sortie (y2) du deuxième modèle (M2) et le signal de sortie (y) du système asservi (S) et
- dont le signal de sortie (yF) est combiné au signal de sortie (y1) du premier modèle (M1) pour former un écart de réglage (e),
caractérisé par le fait que
d) le deuxième modèle (M2) est réalisé sous forme d'observateur des grandeurs d'état du système asservi (S), le signal de sortie (y2) du deuxième modèle (M2) de la grandeur réglée (y) étant adapté à la grandeur réglée (y) par rétro-action pondérée (17 , h1, à hn, 1, ho. 10) de la différence (y₂ - y) entre le signal de sortie (y₂) et la grandeur réglée à l'entrée du deuxième modèle (M2) et
e) le premier modèle (M1) n'étant pas réalisé sous la forme d'un élément dynamique autonome mais en tant que somme de valeurs pondérées des grandeurs d'état du deuxième modèle (M2).

2. Agencement de circuit selon la revendication 1, caractérisé par le fait que le signal différentiel (y2-y) formé dans le premier soustracteur (4) est divisé et d'une part est envoyé au filtre (F) après pondération avec un coefficient (k_{F}) et d'autre part est amené comme rétro-action négative à des additionneurs dans le deuxième modèle (M2) et en outre est amené directement ainsi que via un intégrateur (I) à un quatrième additionneur (10) avant l'entrée du deuxième modèle (M2).

3. Agencement de circuit selon la revendication 2, caractérisé par le fait que le signal de sortie du premier soustracteur (4) multiplié par le coefficient (k_{F}) est amené directement, c'est-à-dire sans passer par le filtre (F), au deuxième soustracteur (5).
